# EUROPEAN PATENT APPLICATION

(11) **EP 2 600 543 A1**
(43) Date of publication of application: **05.06.2013**
(21) Application number: 10856323.0
(22) Date of filing: 01.12.2010
(51) Int. Cl.: H04B 10/08

(54) **METHOD AND OPTICAL LINE TERMINAL FOR OPTICAL FIBER FAULT DIAGNOSIS IN PASSIVE OPTICAL NETWORK**

(30) Priority: 23.08.2010 CN 201010262160
(71) Applicant: ZTE Corporation, Shenzhen, Guangdong 518057 (CN)
(72) Inventor: LIANG, Wei, Shenzhen Guangdong 518057 (CN); LU, Jianxin, Shenzhen Guangdong 518057 (CN)
(74) Representative: Petraz, Gilberto Luigi
(86) International application number: PCT/CN2010/079343
(87) International publication number: WO 2012/024871

(57) **Abstract**

A method for performing optical fiber fault diagnosis in a passive optical network is disclosed in the present invention. The method includes: after receiving an optical fiber fault diagnosis message, a receiving module of an optical line terminal triggering a test module (S10); after triggered by the receiving module, the test module performing an optical time domain reflection test, and obtaining data information (S20) of the test; and a fault diagnosis module analyzing the data information, and performing optical fiber fault diagnosis (S30). An optical line terminal is also disclosed in the present invention, including a control module and an optical module, and the control module includes a receiving module and a fault diagnosis module, and the optical module includes a test module. In the present invention, the process of optical fiber fault diagnosis is performed in combination with PON network management system, which satisfies the requirements of timeliness and maintainability and makes a PON network device possess the ability of optical fiber fault diagnosis in itself, simplifies the networking structure of system, decreases operating costs of network and enhances the reliability of system.

## Description

### Technical Field

The present invention relates to the field of optical access network, and specifically, to a method for applying the Optical Time Domain Reflectometer (OTDR) technology to perform optical fiber fault diagnosis in a passive optical network, and an optical line terminal.

### Background of the Related Art

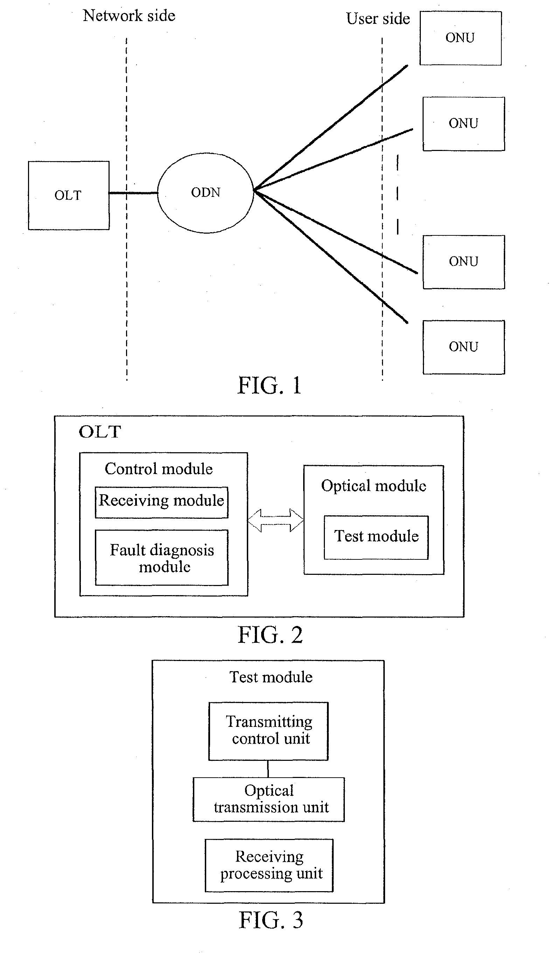

With the mature development of the optical fiber communication technology and the continuous promotion of the service demands of three-network convergence, Fiber To The Home (FTTH) has undoubtedly become an ultimate approach to solve the bottleneck problem of bandwidths of access network, and the technique of Passive Optical Network (PON) is widely popular due to its advantages such as high bandwidth, remote transmission and point-to-multipoint topology and so on, and it has become a major application architecture for every country deploying the FTTH. The PON is a passive optical access technology by using the point-to-multipoint topology structure, and the topological graph is as shown in FIG. 1. It is composed of an Optical Line Terminal (OLT) of office side, an Optical Network Unit (ONU) of user side and an Optical Distribution Network (ODN).

Currently, an xPON system has been in widespread commercial deployment at home and abroad, and meanwhile, the operation maintenance technology of PON network is also growing and developing. In the aspect of optical fiber fault diagnosis, performing optical fiber fault diagnosis with the help of OTDR is still a preferred scheme in the PON system. With respect to the characteristics of the point-to-multipoint topology and high loss introduced by the ODN in the PON network, the industry has developed an optimized OTDR equipment of PON with high resolution and wide dynamic range and has proposed certain methods and techniques for solving the point-to-multipoint test, which can satisfy the test requirements of the PON network. Meanwhile, the optimized OTDR equipment of PON introduces an out-of-band test wavelength λx, which can implement online test of the PON. At present, though using the OTDR equipment to perform optical fiber fault diagnosis in the PON network has no technical difficulty, inherent weaknesses existing in this traditional test means have not been improved yet.

The fundamental form of optical fiber fault diagnosis of the traditional PON is that an OTDR fault diagnosis equipment is independent from the PON network, and after faults occur in the network, a tester makes the OTDR equipment access the PON network to complete the test; the starting process of the test lacks the timeliness (wherein, the timeliness means that the test can be started timely after the software discovers the faults, and the software is controllable); meanwhile, test results also lacks the maintainability. Now, the following test schemes are also used in certain PON network deployments, that is, an OTDR test equipment with multiple channels is configured at an office end of the PON network, and an optical switch and a coupler are utilized to connect each test channel of the OTDR to each downlink optical fiber line of the OLT in the PON system respectively; and meanwhile, a PON network management system is utilized to monitor and manage the OTDR test equipment. This method can satisfy the timeliness and maintainability of the fault diagnosis, but the networking structure is complicated and the introduction of devices such as the optical switch and so on also increases operating costs of the network. Meanwhile, when an OTDR equipment at the office end tests a great many PON OLT optical fiber lines, once the meter breaks down, tests of multiple PON networks will be influenced, and hidden troubles exist in the aspect of reliability.

### Summary of the Invention

The technical problem required to be solved by the present invention is to provide a method for performing optical fiber fault diagnosis in a Passive Optical Network (PON) and an optical line terminal, and the Optical Time Domain Reflectometer (OTDR) technology is applied in PON Optical Line Terminal (OLT) design, which makes a PON device have an ability of optical fiber fault diagnosis in itself and simplifies a networking structure of the system.

In order to solve the above technical problem, the present invention provides a method for performing optical fiber fault diagnosis in a passive optical network, which comprises:
after receiving an optical fiber fault diagnosis message, a receiving module of an optical line terminal triggering a test module;
after triggered by the receiving module, the test module performing an optical time domain reflection test, and obtaining data information of the test; and
a fault diagnosis module analyzing the data information, and performing an optical fiber fault diagnosis.

In the step of performing an optical time domain reflection test, the test module performs the optical time domain reflection test according to preset optical time domain reflection test parameters; wherein, the optical time domain reflection test parameters include: the type of test optical signal, waveform parameter of test optical signal, sampling rate, analog-to-digital conversion bit width and sampling start time;
the type of test optical signal is an optical pulse, and the waveform parameter of test optical signal is a width of the optical pulse; or, the type of test optical signal is a pseudorandom sequence, and the waveform parameter of test optical signal is the length of the pseudorandom sequence.

After the step of the test module performing an optical time domain reflection test and obtaining data information of the test, the method further comprises:
after encapsulating the data information and the test parameters into data formats required by the optical fiber fault diagnosis, the test module sending the data formats to the fault diagnosis module.

The receiving module triggers the test module through an I2C management interface;
the test module sends encapsulated data to the fault diagnosis module through a serial data interface, and the serial data interface is a single-ended serial data interface or a pair of differential serial data interfaces.

The step of the test module encapsulating the data information and the test parameters into data formats required by the optical fiber fault diagnosis comprises:
encapsulating the test parameters into a frame header field, encapsulating the data information into a data field, adding a preamble field used for identifying optical time domain reflection test data before the frame header field, and adding a check bit field after the data field.

The step of a fault diagnosis module analyzing the data information comprises:
if detecting that the preamble field is used for identifying the optical time domain reflection test data and successfully checking data of the check bit field, according to the test parameters extracted from the frame header field, analyzing the data information in the data field.

After the step of a fault diagnosis module performing optical fiber fault diagnosis, the method further comprises:
reporting result information of the optical fiber fault diagnosis to an upper layer network management.

In order to solve the above technical problem, the present invention further provides an optical line terminal, which comprises a control module and an optical module; wherein,
the control module is configured to: control the optical module to send and receive services;
the control module comprises a receiving module and a fault diagnosis module, and the optical module comprises a test module;
the receiving module is configured to: when receiving an optical fiber fault diagnosis message, send a triggering message to the test module;
the test module is configured to: after receiving the triggering message, perform an optical time domain reflection test, and obtain data information of the test; and
the fault diagnosis module is configured to: analyze the data information, and perform optical fiber fault diagnosis.

The test module is configured to perform the optical time domain reflection test in the following way: performing optical time domain reflection test according to preset optical time domain reflection test parameters, the optical time domain reflection test parameters include: the type of test optical signal, waveform parameter of test optical signal, sampling rate, analog-to-digital conversion bit width and sampling start time,
the type of test optical signal is an optical pulse, and the waveform parameter of test optical signal is a width of the optical pulse; or, the type of test optical signal is a pseudorandom sequence, and the waveform parameter of test optical signal is the length of the pseudorandom sequence.

The test module comprises:
a transmitting control unit, configured to: send a control command to an optical transmission unit according to the test parameters;
the optical transmission unit, configured to: after receiving the control command, send a corresponding test optical signal to perform an optical time domain reflection test according to the type of test optical signal and the waveform parameter of test optical signal; and
a receiving processing unit, configured to: after receiving the data information obtained through the optical time domain reflection test, and after encapsulating the data information and the test parameters into data formats required by the optical fiber fault diagnosis, send the data formats to the fault diagnosis module.

The data formats include: a preamble field, a frame header field, a data field and a check bit field, wherein, the preamble field is used for identifying bit stream information of optical time domain reflection test data, the frame header field includes the test parameters, and the data field includes the data information.

The fault diagnosis module is configured to analyze the data information in the following way: after detecting that the preamble field is used for identifying the optical time domain reflection test data and successfully checking data of the check bit field, and according to the test parameters extracted from the frame header field, analyzing the data information in the data field.

The optical module further comprises an I2C management interface and a serial data interface,
the test module receives the triggering message through the I2C management interface; and
the test module sends encapsulated data to the fault diagnosis module through the serial data interface, and the serial data interface is one single-ended serial data interface or a pair of differential serial data interfaces.

The fault diagnosis module is further configured to: report result information of the optical fiber fault diagnosis to an upper layer network management.

In conclusion, with the method for performing optical fiber fault diagnosis in the passive optical network and the optical line terminal provided by the present invention, firstly, the process of optical fiber fault diagnosis is performed in combination with a PON network management system, which satisfies the requirements of timeliness and maintainability; furthermore, the OTDR technology is applied in the PON OLT design, which makes a PON network device possess the ability of optical fiber fault diagnosis in itself and simplifies the networking structure of the system, and meanwhile, it is not required to introduce other devices or components besides the OTDR component in the method of the present invention, which decreases operating costs of the network; in addition, with the method of the present invention, the optical fiber fault diagnosis within each OLT domain is carried out independently, which enhances the reliability of the system; it also can utilize uplink management channels of the PON system to report fault conditions within each OLT domain to the upper layer network management for performing centralized processing, which improves the manageability and maintainability of fault information in the PON system.

### Brief Description of Drawings

In combination with the specific descriptions of the accompanying drawings, the structure and process of the method of the present invention will be more intuitive and clear.
FIG. 1 illustrates a fundamental structure chart of Passive Optical Network (PON).
FIG. 2 is a schematic diagram of OLT according to the present invention.
FIG. 3 is a schematic diagram of test module according to the present invention.
FIG. 4 is a flow diagram of method for performing optical fiber fault diagnosis in a passive optical network according to the present invention.
FIG. 5 is a schematic diagram of the OLT according to the example.
FIG. 6 is a schematic diagram of optical module of the OLT according to the example.
FIG. 7 is a schematic diagram of OTDR test module of the OLT according to the example.
FIG. 8 is a schematic diagram of one kind of data format of OTDR test data in accordance with the example of the present invention.
FIG. 9 is a flow diagram of method for performing optical fiber fault diagnosis in a passive optical network according to the example of the present invention.

### Preferred Embodiments of the Present Invention

In order to better understand the present invention, the present invention will be further described in combination with the accompanying drawings and specific examples below. It should be noted that the examples in the present invention and the characteristics in the examples can be optionally combined with each other in the condition of no conflict.

FIG. 2 is a schematic diagram of an optical line terminal according to the present invention, and as shown in FIG. 2, the optical line terminal of the example includes: a control module and an optical module. The control module is used for service processing and system management of the optical line terminal, which includes controlling the optical module to send and receive serviced, wherein, the control module includes a receiving module and a fault diagnosis module and has a function of control management and data analysis for a test module of an optical time domain reflectometer, and the optical module includes a test module; wherein,
the receiving module is configured to: when receiving an optical fiber fault diagnosis message, send a triggering message to the test module;
the test module is configured to: after receiving the triggering message, perform an optical time domain reflection test, and obtain data information of the test; and
the fault diagnosis module is configured to: analyze the data information, and perform optical fiber fault diagnosis.

Therefore, the optical line terminal of the example can perform optical fiber fault diagnosis by itself, which satisfies the requirements of timeliness and maintainability, and simplifies a networking structure of the system.

Furthermore, the test module is configured to perform the optical time domain reflection test according to preset optical time domain reflection test parameters.

The optical time domain reflection test parameters include: the type of test optical signal, a waveform parameter of test optical signal, a sampling rate, analog-to-digital conversion bit width and sampling start time, and the type of test optical signal is an optical pulse, and the waveform parameter of test optical signal is a width of the optical pulse; or, the type of test optical signal is a pseudorandom sequence, and the waveform parameter of test optical signal is the length of the pseudorandom sequence.

Preferably, the optical module includes an I2C management interface and a serial data interface;
the test module receives the triggering message through the I2C management interface; and
the test module sends the encapsulated data to the fault diagnosis module through the serial data interface, and the serial data interface is one single-ended serial data interface or a pair of differential serial data interfaces.

The test module of the example can include a transmitting control unit, an optical transmission unit and a receiving processing unit as shown in FIG. 3, and
the transmitting control unit is configured to: send a control command to the optical transmission unit according to the test parameters;
the optical transmission unit is configured to: after receiving the control command, send a corresponding test optical signal to perform an optical time domain reflection test according to the type of test optical signal and the waveform parameter of test optical signal; and
the receiving processing unit is configured to: after receiving the data information obtained through the optical time domain reflection test, and after encapsulating the data information and the test parameters into data formats required by the optical fiber fault diagnosis, send the data formats to the fault diagnosis module. Wherein, the data formats include: a preamble field, a frame header field, a data field and a check bit field, wherein, the preamble field is used for identifying bit stream information of optical time domain reflection test data, the frame header field includes the test parameters, and the data field is the data information obtained by the test.

Information of the test parameters at least includes: type information of test optical signal, waveform information of test optical signal, information of analog-to-digital conversion sampling rate, information of analog-to-digital conversion bit width and information of sampling start time.

The fault diagnosis module is further configured to: after detecting that the preamble field is used for identifying the optical time domain reflection test data and successfully checking data of the check bit field, according to the test parameters extracted from the frame header field, analyze the data information in the data field.

Furthermore, the optical module includes an I2C management interface and a serial data interface;
the test module receives the triggering message through the I2C management interface; and
the test module sends encapsulated data to the fault diagnosis module through the serial data interface, and the serial data interface is one single-ended serial data interface or a pair of differential serial data interfaces.

The control module is further configured to: report result information of the optical fiber fault diagnosis to an upper layer network management. Thus, it can implement that optical fiber fault signals on each device are reported to the upper layer network management for performing centralized analysis processing.

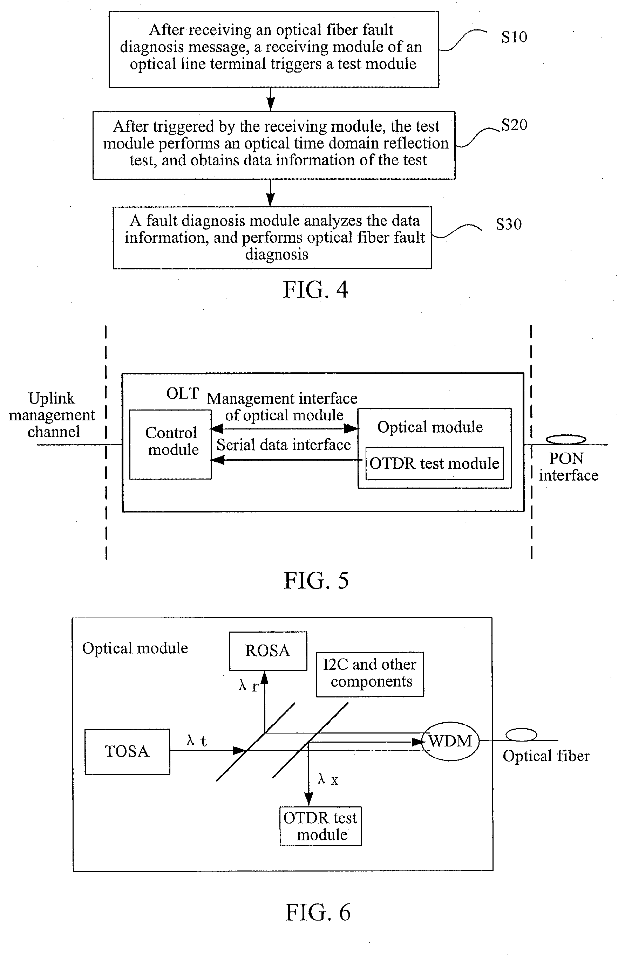

FIG. 4 is a flow diagram of method for performing optical fiber fault diagnosis in a passive optical network according to the present invention, and as shown in FIG. 4, the method of the example can include the following steps.

In step S10, after receiving an optical fiber fault diagnosis message, a receiving module of an optical line terminal triggers a test module.

In step S20, after triggered by the receiving module, the test module performs an optical time domain reflection test, and obtains data information of the test.

In step S30, a fault diagnosis module analyzes the data information, and performs optical fiber fault diagnosis.

Therefore, the method of the example can implement that the optical line terminal performs the optical fiber fault diagnosis by itself, which satisfies the requirements of timeliness and maintainability, and no other devices or components are required, which simplifies the networking structure of the system.

Furthermore, in step S20, the test module performs an optical time domain reflection test according to preset optical time domain reflection test parameters.

The optical time domain reflection test parameters can include: the type of test optical signal, a waveform parameter of test optical signal, a sampling rate, analog-to-digital conversion bit width and sampling start time. The type of test optical signal is an optical pulse, and the waveform parameter of test optical signal is the width of the optical pulse; or, the type of test optical signal is a pseudorandom sequence, and the waveform parameter of test optical signal is the length of the pseudorandom sequence.

Furthermore, in step S20, after the test module performs the optical time domain reflection test and obtaining the data information, it also can include: after encapsulating the data information and the test parameters into data formats required by the optical fiber fault diagnosis, the test module sending the data formats to the fault diagnosis module.

Preferably, the receiving module triggers the test module through an I2C management interface;
the test module sends the encapsulated data to the fault diagnosis module through a serial data interface, and the serial data interface is one single-ended serial data interface or a pair of differential serial data interfaces.

Furthermore, the step of the test module encapsulating the data information and the test parameters into data formats required by the optical fiber fault diagnosis includes:
encapsulating the test parameters into a frame header field, encapsulating the data information into a data field, adding a preamble field used for identifying optical time domain reflection test data before the frame header field, and adding a check bit field after the data field.

Furthermore, in step S30, the step of the fault diagnosis module analyzing the data information includes:
if detecting that the preamble field is used for identifying the optical time domain reflection test data and successfully checking data of the check bit field, according to the test parameters extracted from the frame header field, analyzing the data information in the data field.

Furthermore, after the step of the fault diagnosis module performing optical fiber fault diagnosis, it also includes: reporting result information of the optical fiber fault diagnosis to the upper layer network management. Thus, it can implement that the upper layer network management performs centralized analysis processing on optical fiber fault signals.

The method for performing optical fiber fault diagnosis in the passive optical network according to the present invention will be described in detail by a specific example below.

In the method of the example, the OTDR technology and the PON OLT equipment are combined, and FIG. 5 is a schematic diagram of an OLT according to the example, and as shown in FIG. 5, an optical module of the OLT includes an OTDR test module, which can complete an OTDR test in the optical module of the OLT and transmit data obtained by the test to a control module of the OLT through a dedicated OTDR data interface of the optical module; the control module of the OLT completes the analysis of test data and the fault location; meanwhile, the control module of the OLT can implement the control and management of the OTDR test through a management interface of the optical module (such as an I2C management interface of the optical module). Through the above test and diagnosis process, the process of optical fiber fault diagnosis of system can be completed in the PON OLT equipment with the method of the example; additionally, uplink management channels of the PON system can be utilized to report fault conditions within each OLT domain to the upper layer network management for performing centralized processing with the method of the example.

The optical module in the example is required to be improved in combination with test requirements based on a traditional PON OLT optical module as shown in FIG. 6. With regard to the function, in the example, an OTDR function component (i.e. an OTDR test module) is added in the optical module of the OLT so as to complete the OTDR online test and data conversion process; and 1625nm or 1650nm can be selected as the wavelength of a test optical signal of the OTDR. With regard to the electrical interface, one single-ended data interface or a pair of differential serial data interfaces can be added in the optical module of the OLT in the example so as to complete the high speed transmission for data signals after the OTDR test. If the OLT has multiple optical modules, the control module can perform uniform management on the multiple optical modules and the OTDR test module in each optical module through the I2C management interface. In FIG. 6, a Receiver Optical Subassembly (ROSA) is an original service receiving module in the optical module, and a Transmitter Optical Subassembly (TOSA) is an original service transmitting module in the optical module, and adding the OTDR test module in the optical module in the present invention will not influence normal operations of the ROSA and TOSA.

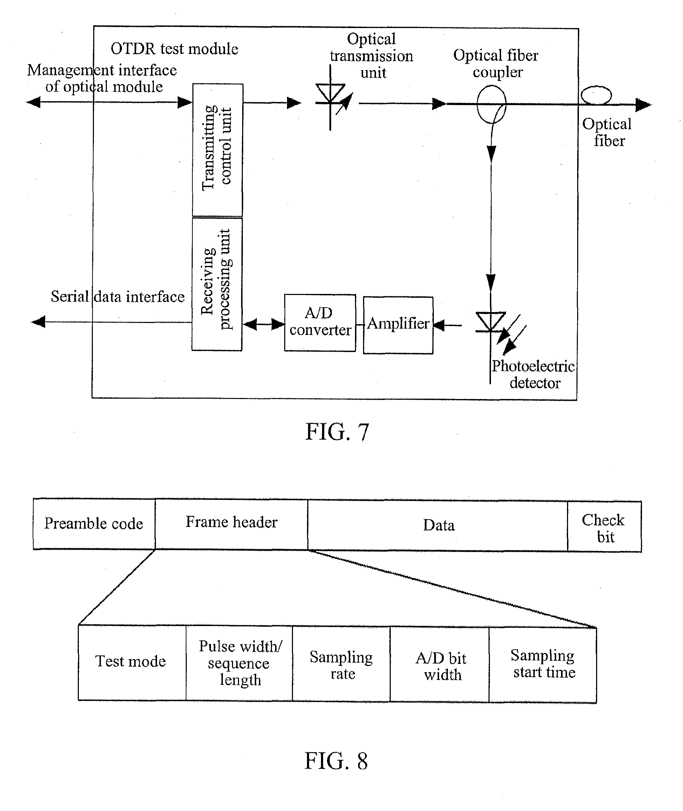

The OTDR test module of the example can complete the process of sending, receiving and control management during the OTDR test as shown in FIG. 7. The OTDR test module can include a transmitting control unit, an optical transmission unit and a receiving processing unit.

The transmitting control unit can complete a transmitting control function for optical signals during the OTDR test, and it can select the type of test optical signal and the waveform of control signal according to a command of the control module, and control the optical transmission unit to send a predetermined test optical signal. According to the test requirements, an optical pulse or a pseudorandom sequence can be selected as the type of test optical signal of the OTDR test module. Meanwhile, it also can perform control to send the width of the optical pulse and the length of the pseudorandom sequence.

The optical transmission unit can be a semiconductor laser and a laser diode and so on, and the optical transmission unit can send the predetermined test optical signal according to a control command sent by a transmitting control unit. For example, an optical pulse with specified width and the wavelength of 1625nm or 1650nm can be sent to the optical fiber through an optical fiber coupler.

The receiving processing unit is used for receiving the optical signal obtained in the OTDR test, and after processing the optical signal, sending the processed optical signal to the control module.

Specifically, the optical signal returned from the optical fiber coupler enters the receiving processing unit after going through a photoelectric detector, an amplifier and an Analog to Digital (A/D) converter.

The receiving processing unit can complete a function of caching the data signals, and meanwhile, it can control the start of the A/D converter, set a sampling rate of A/D conversion, and calculate the sampling start time and complete the processing of data formats; and after going through the processing of the receiving processing unit, the data obtained by the test are sent to the control module of the OLT through the OTDR data interface defined on the optical module after undergoing the parallel-to-serial conversion.

The management interface of the optical module uses the existing I2C management interface of the optical module, and in the premise of keeping an original management function of the I2C interface of the optical module, the I2C interface is connected with the OTDR function component added in the optical module to complete the control and management of the OTDR test process.

The control module of the OLT, in the premise of keeping the original functions of service processing and system management of the OLT, adds functions of OTDR management and data analysis, and it can initiate the OTDR test process through the management interface of the optical module, set OTDR test parameters and complete the analysis of test data and the process of fault location.

When the control module of the OLT initiates the test, in a default condition, the OTDR test module uses an optical pulse with fixed width and a default sampling rate to perform the test. Meanwhile, the transmitting control unit of the OTDR test module provides a selectable test mode of optical pulse or pseudorandom sequence; and in the selected test mode, it also provides a selectable optical pulse width or pseudorandom sequence length. The receiving processing unit of the OTDR test module also provides a selectable sampling rate. When the OTDR test is initiated, the control module can set the test parameters of the OTDR test module according to differences of the test requirements.

When the control module of the OLT initiates the OTDR test through the management interface of the optical module, the system starts the A/D converter in the OTDR test module of the optical module and a timing module in the receiving processing unit simultaneously. The timing module can be used for calculating the time from the optical transmission unit starting the light emission to the receiving processing unit receiving the first group of data signals obtained by tests; after the signals obtained in the tests go through the A/D conversion, data cache is performed; and then the delay of system transmission and processing is subtracted from the time of the timing module and the sampling time of the first sampling point can be calculated. Then, the receiving processing unit encapsulates the necessary test parameters, data obtained in the tests and check bits into the data formats agreed by the system, and performs data serialization processing, which are ultimately transmitted to the control module of the OLT through the OTDR data interface of the optical module so as to perform analysis and fault location.

FIG. 8 is a schematic diagram of one kind of data format of OTDR test data agreed by the example of the present invention, and as shown in FIG. 8, data formats agreed by the system of the example include: a preamble field, a frame header field, a data field and a check bit field. The preamble field is specific bit stream information agreed by the system; the frame header field mainly includes test parameters, and the test parameters should at least include information such as test mode (i.e. type information of test optical signal), waveform information of test optical signal (including the optical pulse width or pseudorandom sequence length), sampling rate, A/D bit width and sampling start time and so on; the data field is the test data stream information, and the effective length of the data field is determined according to the maximum sampling rate of an OTDR test module and the A/D conversion bit width, and the total length of the data field is fixed, and the length of the data field should at least be able to contain all test data under the maximum sampling rate. The check bit field is added through an agreed check algorithm during the data encapsulation, so as to complete data check of the receiving terminal.

In the example, when receiving the test data sent by the optical module, the control module of the OLT detects OTDR test data frames according to an agreed preamble, and then performs data check according to a check bit, for example, the check is performed according to a predetermined Cyclic Redundancy Check (CRC), if the check fails, it is indicated that an error occurs in the transmission, and the OTDR test module in the optical module is required to perform retransmission; otherwise, the test parameters are extracted from the frame header information, and according to the information such as sampling rate, A/D bit width and sampling start time and so on, analysis processing is performed to the data stream of the data field, so as to complete the data analysis and fault location.

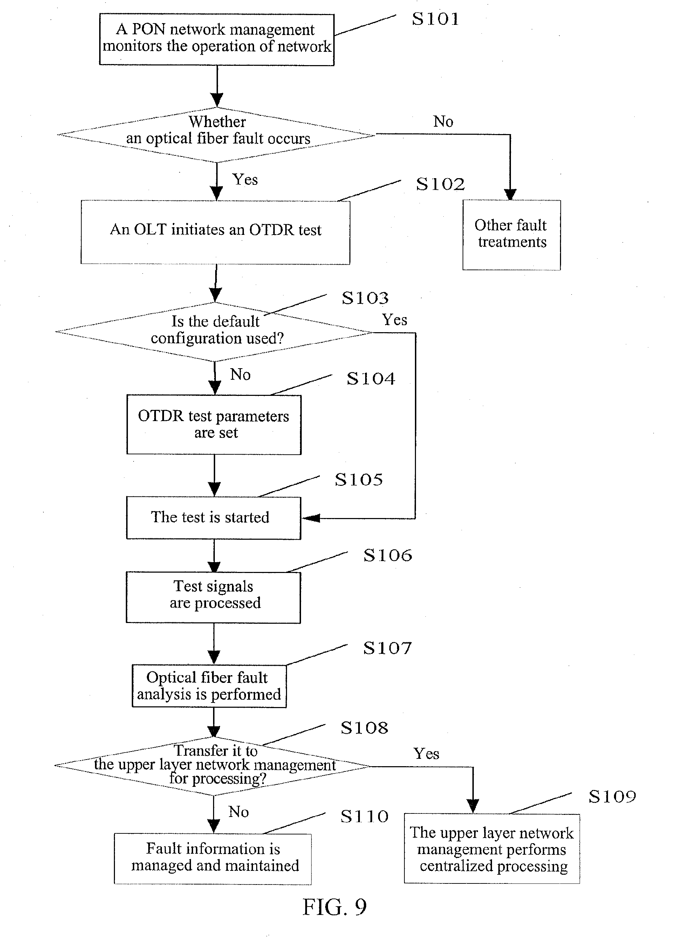

When using the method of the present invention to test a PON system, the flow is as shown in FIG. 9, and the specific test process includes the following steps.

In step S101, in the running process of the PON system, an upper layer network management of the PON system monitors the running status of system in due time, and when determining that an optical fiber fault occurs, a corresponding OLT is triggered, and step S102 is executed, and if determining that other faults occur, other fault treatments are performed.

In step S102, the OLT initiates an OTDR test.

Specifically, a control module of the PON OLT initiates an OTDR test command through a management interface of an optical module, and starts an OTDR test process in due time.

In step S103, whether to use a default configuration is judged, if yes, it proceeds to step S105, otherwise it proceeds to step S104.

In step S 104, test parameters are set according to the current test environment.

Specifically, the control module of the PON OLT sets the test parameters through the management interface of the optical module, and the test parameters can include: the type of test optical signal, an optical pulse width or pseudorandom sequence length, and an optical time domain reflectometer test sampling rate and so on.

In step S105, the test is started.

In step S106, signals obtained in the test are processed during the test process.

Specifically, a receiving processing unit of an OTDR test module in the optical module performs analog-digital conversion and processing to the signals obtained in the test, and completes data format encapsulation; and it transmits test data to the control module of the PON OLT through an OTDR data interface of the optical module.

In step S107, optical fiber fault analysis is performed.

Specifically, after receiving test data frames, the control module of the PON OLT extracts the OTDR test parameters and test data, and completes the analysis of the OTDR test data and the process of optical fiber fault location.

In step S108, whether to transfer it to an upper layer network management for processing is judged, if yes, it proceeds to step S109, otherwise it proceeds to step S110.

In step S109, the optical fiber fault information is sent to the upper layer management, and the upper layer management performs centralized processing.

Specifically, according to the requirements of system management and maintenance, if the network deployment requires the upper layer network management to maintain and manage the fault information of system, fault conditions within each OLT domain are reported to the upper layer network management for performing centralized processing through the uplink management channels of the PON OLT system.

In step S110, the PON OLT completes the management and maintenance of the fault information by itself, and the test is finished.

In the example, the OTDR test technology is applied in the system design of the PON OLT, and the OTDR function component and data interface are added in the optical module of the OLT; the functions of OTDR management and data analysis are added in the control module of the OLT, which enables the control module of the OLT to send a command through a management interface of the optical module so as to initiate the process of OTDR fault diagnosis in due time when the optical fiber fault occurs; and the data obtained in the test are returned to the control module of the OLT through the OTDR data interface of the optical module, and the process of data analysis and fault location is finished.

According to the system requirements, the optical fiber fault conditions tested by using the OLT of the example can be analyzed and processed in the PON OLT, which implements the optical fiber fault diagnosis of the PON system. It also can report the fault conditions within each OLT domain to the upper layer network management for performing centralized processing through the uplink management channels of the PON system, which eventually implements the optical fiber fault diagnosis of the PON system.

The above description is only the preferred examples of the present invention. Certainly, the present invention can still have other various examples, and the present invention is also applied to slight modifications in other optical network systems. The skilled person in the art can make various corresponding changes and transformations according to the present invention without departing from the spirit and essence of the present invention, and these corresponding changes and transformations shall all fall into the protection scope of the appended claims of the present invention.

### Industrial Applicability

With the method and device for using the OTDR technology to perform PON optical fiber diagnosis provided by the present invention, firstly, the process of optical fiber fault diagnosis is performed in combination with a PON network management system, which satisfies the requirements of timeliness and maintainability; furthermore, the OTDR technology is applied in the PON OLT design, which makes the PON device have the ability of optical fiber fault diagnosis in itself and simplifies the networking structure of the system, and meanwhile, it is not required to introduce other devices or components besides the OTDR component in the method of the present invention, which decreases the operating costs of the network; in addition, with the method of the present invention, the optical fiber fault diagnosis within each OLT domain is carried out independently, which enhances the reliability of the system.

## Claims

1. A method for performing optical fiber fault diagnosis in a passive optical network, comprising:
after receiving an optical fiber fault diagnosis message, a receiving module of an optical line terminal triggering a test module;
after triggered by the receiving module, the test module performing an optical time domain reflection test, and obtaining data information of the test; and
a fault diagnosis module analyzing the data information, and performing optical fiber fault diagnosis.

2. The method according to claim 1, wherein: in the step of performing an optical time domain reflection test, the test module performs the optical time domain reflection test according to preset optical time domain reflection test parameters; wherein, the optical time domain reflection test parameters include: the type of test optical signal, a waveform parameter of test optical signal, a sampling rate, analog-to-digital conversion bit width and sampling start time;
the type of test optical signal is an optical pulse, and the waveform parameter of test optical signal is the width of the optical pulse; or, the type of test optical signal is a pseudorandom sequence, and the waveform parameter of test optical signal is the length of the pseudorandom sequence.

3. The method according to claim 2, wherein: after the step of the test module performing an optical time domain reflection test and obtaining data information of the test, the method further comprises:
after encapsulating the data information and the test parameters into data formats required by the optical fiber fault diagnosis, the test module sending the data formats to the fault diagnosis module.

4. The method according to claim 3, wherein:
the receiving module triggers the test module through an I2C management interface;
the test module sends encapsulated data to the fault diagnosis module through a serial data interface, and the serial data interface is one single-ended serial data interface or a pair of differential serial data interfaces.

5. The method according to claim 3, wherein: the step of the test module encapsulating the data information and the test parameters into data formats required by the optical fiber fault diagnosis comprises:
encapsulating the test parameters into a frame header field, encapsulating the data information into a data field, adding a preamble field for identifying optical time domain reflection test data before the frame header field, and adding a check bit field after the data field.

6. The method according to claim 5, wherein: the step of a fault diagnosis module analyzing the data information comprises:
if detecting that the preamble field is for identifying the optical time domain reflection test data and successfully checking data of the check bit field, according to the test parameters extracted from the frame header field, analyzing the data information in the data field.

7. The method according to any one of claims 1 to 6, wherein: after the step of a fault diagnosis module performing optical fiber fault diagnosis, the method further comprises:
reporting result information of the optical fiber fault diagnosis to an upper layer network management.

8. An optical line terminal, the optical line terminal comprising a control module and an optical module; wherein,
the control module is configured to: control the optical module to send and receive services;
the control module comprises a receiving module and a fault diagnosis module, and the optical module comprises a test module;
the receiving module is configured to: when receiving an optical fiber fault diagnosis message, send a triggering message to the test module;
the test module is configured to: after receiving the triggering message, perform an optical time domain reflection test, and obtain data information of the test; and
the fault diagnosis module is configured to: analyze the data information, and perform optical fiber fault diagnosis.

9. The optical line terminal according to claim 8, wherein:
the test module is configured to perform the optical time domain reflection test in a following way: performing the optical time domain reflection test according to preset optical time domain reflection test parameters, wherein the optical time domain reflection test parameters include: the type of test optical signal, a waveform parameter of test optical signal, a sampling rate, analog-to-digital conversion bit width and sampling start time,
the type of test optical signal is an optical pulse, and the waveform parameter of test optical signal is the width of the optical pulse; or, the type of test optical signal is a pseudorandom sequence, and the waveform parameter of test optical signal is the length of the pseudorandom sequence.

10. The optical line terminal according to claim 9, wherein, the test module comprises:
a transmitting control unit, configured to: send a control command to an optical transmission unit according to the test parameters;
the optical transmission unit, configured to: after receiving the control command, send a corresponding test optical signal to perform the optical time domain reflection test according to the type of test optical signal and the waveform parameter of test optical signal; and
a receiving processing unit, configured to: after receiving the data information obtained through the optical time domain reflection test, and after encapsulating the data information and the test parameters into data formats required by the optical fiber fault diagnosis, send the data formats to the fault diagnosis module.

11. The optical line terminal according to claim 10, wherein, the data formats include: a preamble field, a frame header field, a data field and a check bit field, wherein, the preamble field is for identifying bit stream information of optical time domain reflection test data, the frame header field includes the test parameters, and the data field includes the data information.

12. The optical line terminal according to claim 11, wherein,
the fault diagnosis module is configured to analyze the data information in a following way: after detecting that the preamble field is for identifying the optical time domain reflection test data and successfully checking data of the check bit field, according to the test parameters extracted from the frame header field, analyzing the data information in the data field.

13. The optical line terminal according to claim 10, wherein, the optical module further comprises an I2C management interface and a serial data interface,
the test module receives the triggering message through the I2C management interface; and
the test module sends encapsulated data to the fault diagnosis module through the serial data interface, and the serial data interface is one single-ended serial data interface or a pair of differential serial data interfaces.

14. The optical line terminal according to any one of claims 8 to 13, wherein,
the fault diagnosis module is further configured to: report result information of the optical fiber fault diagnosis to an upper layer network management.
